(19) Europäisches Patentamt
European Patent Office
Office européen des brevets

(11) EP 4 475 571 A1

(12) **EUROPEAN PATENT APPLICATION**
published in accordance with Art. 153(4) EPC

(43) Date of publication:
**11.12.2024 Bulletin 2024/50**

(21) Application number: **23773783.8**

(22) Date of filing: **20.03.2023**

(51) International Patent Classification (IPC):
***H04W 4/029*** *(2018.01)*

(52) Cooperative Patent Classification (CPC):
**H04W 4/029**

(86) International application number:
**PCT/CN2023/082489**

(87) International publication number:
**WO 2023/179535 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 CN 202210300592**
**25.06.2022 CN 202210728173**

(71) Applicant: **Huawei Technologies Co., Ltd.**
**Shenzhen, Guangdong 518129 (CN)**

(72) Inventors:
- **GUO, Zhan**
  **Shenzhen, Guangdong 518129 (CN)**
- **WANG, Kang**
  **Shenzhen, Guangdong 518129 (CN)**
- **LI, Weihua**
  **Shenzhen, Guangdong 518129 (CN)**

(74) Representative: **Maiwald GmbH**
**Engineering**
**Elisenhof**
**Elisenstrasse 3**
**80335 München (DE)**

# (54) INFORMATION INTERACTION METHOD AND RELATED APPARATUS

(57) This application relates to a ranging and positioning scenario in the wireless communication sensing field, and in particular, to an information exchanging method and a related apparatus. The method includes: Two communication parties (for example, a first device and a second device) negotiate, using respective narrowband communication modules (for example, Wi-Fi, Bluetooth, NFC, or Zigbee modules), a parameter used in a ranging process, and then perform ranging using respective UWB modules based on the parameter determined by the narrowband communication modules through negotiation. Embodiments of this application can be used to make the UWB module less complex and reduce power consumption of the UWB module. This application is applied to a UWB-based wireless personal local area network system, a sensing system, and a WLAN system that supports 802.11 series protocols.

First device
UWB module
Narrowband communication module
Second device
UWB module
Narrowband communication module
S101: Send a first message, where the first message is used to discover the second device
S102: Send a second message to the discovered second device, where the second message carries ranging parameter information, and the ranging parameter information is used by the UWB module in the second device for ranging
S103: Send a first ranging frame based on the ranging parameter information
S104: Send a second ranging frame based on the ranging parameter information

FIG. 4



Processed by Luminess, 75001 PARIS (FR)

## Description

This application claims priorities to Chinese Patent Application No. 202210300592.3, filed with the China National Intellectual Property Administration on March 25, 2022 and entitled "NARROWBAND-ASSISTED BROADBAND RANGING CONTROL METHOD AND APPARATUS", and to Chinese Patent Application No. 202210728173.X, filed with the China National Intellectual Property Administration on June 25, 2022 and entitled "INFORMATION EXCHANGING METHOD AND RELATED APPARATUS", both of which are incorporated herein by reference in their entireties.

## TECHNICAL FIELD

This application relates to the field of wireless communication technologies, and in particular, to an information exchanging method and a related apparatus.

## BACKGROUND

With the development of indoor positioning technologies, ultra-wideband (ultra-wideband, UWB) ranging and positioning technologies are widely applied. The ultra-wideband (UWB) technology, which is a wireless carrier communication technology, transmits data using nanosecond-level non-sinusoidal narrow impulses, and performs modulation on impulses with very steep rise and fall time. Therefore, a wide spectrum range is occupied for the technology, allowing signals to have a gigahertz (GHz) bandwidth. Because UWB impulses are narrow and have low radiation spectrum density, UWB has advantages of strong multi-path resolution, low power consumption, high confidentiality, and the like, and can still implement ranging and positioning in complex multi-path environments.

An existing UWB ranging process requires construction of a personal area network (personal area network, PAN) and time division multiple access (time division multiple address, TDMA)-based slot assignment, completes ranging and/or positioning functions, and the like. This makes apparatuses for implementing the UWB technology highly complex because both communication and ranging functions are to be implemented. In addition, the apparatuses typically need to operate for a long time and accordingly have high power consumption.

## SUMMARY

Embodiments of this application provide an information exchanging method and a related apparatus, to make a UWB module less complex and reduce power consumption of the UWB module.

The following describes this application from different aspects. It should be understood that, for the following implementations and beneficial effect of the different aspects, refer to each other.

Technical solutions of this application are mainly applied to a ranging and positioning scenario in the wireless communication sensing field. A first device in this application includes at least a narrowband communication module, and optionally further includes a UWB module. A second device includes at least a UWB module and a narrowband communication module. The UWB module may be understood as an apparatus, a chip, or the like that implements a UWB technology. Correspondingly, the narrowband communication module may be understood as an apparatus, a chip, or the like that implements a narrowband communication technology (such as near field communication, Wi-Fi, Bluetooth, or Zigbee (a ZigBee protocol)). In one device (device), a UWB module and a narrowband communication module may be different apparatuses or chips. Certainly, the UWB module and the narrowband communication module may alternatively be integrated into one apparatus or chip. This application does not limit an implementation of the UWB module and the narrowband communication module in the device.

According to a first aspect, this application provides an information exchanging method. The method includes: A narrowband communication module in a first device sends a first message used to discover a second device; and the narrowband communication module in the first device sends a second message to the discovered second device, where the second message carries ranging parameter information used by a UWB module in the second device for ranging. The ranging parameter information includes various ranging parameters used in a ranging process, such as a ranging role and ranging slot assignment.

Optionally, the narrowband communication module in the first device obtains the ranging parameter information configured by an upper layer, or obtains the ranging parameter information from a UWB module in the first device.

Generally, after a UWB module is woken up, construction of a personal area network (PAN) is required, ranging slot (TDMA-based slot) assignment and ranging and/or positioning functions needs to be completed, and the like. Consequently, the UWB module has long operating time, high power consumption, and high implementation complexity. However, in this application, the first device exchanges or negotiates the ranging parameter information (such as the ranging role and the ranging slot assignment) with the second device using the narrowband communication module (such as Wi-Fi, NFC, Bluetooth, or Zigbee (a ZigBee protocol)) in the first device. This reduces operating time of the UWB module and power consumption, makes implementation of the UWB module less complex, and reduces costs.

With reference to the first aspect, in a possible implementation, the second message is an extended broadcast frame, and the ranging parameter information is carried in a data content field in the extended broadcast frame. The extended broadcast frame further includes a data type field, the data type field indicates a type of broadcast data carried in the extended broadcast frame, and the data type field is set to a reserved value, for example, any value from 7 to 255, to indicate that the extended broadcast frame carries the ranging parameter information. It may be understood that, in this case, the narrowband communication module in the first device sends the second message in a broadcast manner.

In this application, the ranging parameter information is sent in the broadcast manner, allowing a plurality of devices all to perform ranging. For example, one device performs ranging with a plurality of devices, or a plurality of devices perform ranging with a plurality of devices. This can improve ranging efficiency.

With reference to the first aspect, in a possible implementation, the ranging parameter information is carried in a payload (payload) of the second message; and before the narrowband communication module in the first device sends a second message to the discovered second device, the method further includes: The narrowband communication module in the first device receives an access request message sent by a narrowband communication module in the second device, where the access request message is used to request to establish a connection to the narrowband communication module in the first device; and the narrowband communication module in the first device sends an access response message, where the access response message is used to agree to a request of the access request message. It may be understood that, after the narrowband communication module in the second device receives the access response message, the connection between the narrowband communication module in the first device and the narrowband communication module in the second device is established.

In this application, the first device and the second device first establish the connection using respective narrowband communication modules, and then negotiate and determine the ranging parameter information in a connected state, to support one-to-one ranging. The ranging parameter information is determined by the first device and the second device through negotiation. This is more helpful for both parties to learn of information (for example, capability information) of each other, and facilitates implementation of a subsequent ranging process.

With reference to the first aspect, in a possible implementation, the ranging parameter information is content included in a payload (payload) information element (information element, IE) in ranging control information (ranging control message, RCM). For example, the ranging parameter information includes but is not limited to one or more of the following: a ranging method, an identifier of a ranging device, a ranging role of a ranging device, a ranging mode, a ranging frame format, ranging slot assignment, an angle measurement requirement, or a measurement value report manner. The ranging method includes single-sided two-way ranging (single-sided two-way ranging, SS-TWR) and double-sided two-way ranging (double-sided two-way ranging, DS-TWR). The identifier of the ranging device may be a medium access control (medium access control, MAC) address, an ID (identifier, identifier), or the like of each device participating in the ranging. The ranging role of the ranging device may indicate that which devices are initiators (initiators) and which devices are responders (responders) among devices participating in the ranging. The ranging mode includes one or more of the following: ranging between one device and one device (one-to-one ranging), ranging between one device and a plurality of devices (one-to-many ranging), or ranging between a plurality of devices and a plurality of devices (many-to-many ranging). The angle measurement requirement may be understood as whether there is a positioning requirement, whether there is a requirement for measuring a relative angle (or a relative orientation), or whether an angle of arrival (Angle of Arrival, AoA) horizontal angle and an AoA elevation angle of the first device relative to the second device (or the second device relative to the first device) need to be measured. The measurement value report manner may indicate whether a measurement value (or a ranging result) is transmitted from an initiator to a responder, or transmitted from a responder to an initiator.

With reference to the first aspect, in a possible implementation, after the narrowband communication module in the first device sends a second message to the discovered second device, the method further includes: The UWB module in the first device receives a first ranging frame sent by the UWB module in the second device; and the UWB module in the first device sends a second ranging frame based on the ranging parameter information.

In this application, the UWB modules in the two communication parties (the first device and the second device) perform ranging based on the ranging parameter information broadcast or determined through negotiation by the narrowband communication modules. This can reduce operating time of the UWB module and power consumption, make implementation of the UWB module less complex, and reduce costs.

With reference to the first aspect, in a possible implementation, after the UWB module in the first device receives a first ranging frame sent by the UWB module in the second device, the method further includes: The narrowband communication module in the first device sends a third message, where the third message carries a first ranging result, and the first ranging result includes receiving time of the first ranging frame and sending time of the second ranging frame.

Optionally, before the narrowband communication module in the first device sends a second message, the method further includes: The UWB module in the first device transmits the first ranging result to the narrowband communication module in the first device.

Optionally, the first ranging result further includes reliability of the receiving time of the first ranging frame.

Optionally, when the angle measurement requirement in the ranging parameter information is that there is the positioning requirement, that is, the relative angle (or the relative orientation) needs to be measured, the first ranging result further includes one or more of the following: spatial positioning coordinates $(x_1, y_1, z_1)$ of the first device, relative positioning coordinates $(x_{21}, y_{21}, z_{21})$ of the second device relative to the first device, the AOA horizontal angle of the second device relative to the first device, or the AOA elevation angle of the second device relative to the first device.

With reference to the first aspect, in a possible implementation, after the UWB module in the first device sends a second ranging frame based on the ranging parameter information, the method further includes: The narrowband communication module in the first device receives a fourth message sent by the narrowband communication module in the second device, where the fourth message carries a second ranging result, and the second ranging result includes receiving time of the second ranging frame and sending time of the first ranging frame.

Optionally, the second ranging result further includes reliability of the receiving time of the second ranging frame.

Optionally, when the angle measurement requirement in the ranging parameter information is that there is the positioning requirement, that is, the relative angle (or the relative orientation) needs to be measured, the second ranging result further includes one or more of the following: spatial positioning coordinates $(x_2, y_2, z_2)$ of the second device, relative positioning coordinates $(x_{12}, y_{12}, z_{12})$ of the first device relative to the second device, the AOA horizontal angle of the first device relative to the second device, or the AOA elevation angle of the first device relative to the second device.

According to a second aspect, this application provides an information exchanging method. The method includes: A narrowband communication module in a second device receives a first message sent by a narrowband communication module in a first device, where the first message is used to discover the second device; and the narrowband communication module in the second device receives a second message sent by the narrowband communication module in the first device, where the second message carries ranging parameter information, and the ranging parameter information is used by a UWB module in the second device for ranging.

With reference to the second aspect, in a possible implementation, the second message is an extended broadcast frame, and the ranging parameter information is carried in a data content field in the extended broadcast frame. The extended broadcast frame further includes a data type field, the data type field indicates a type of broadcast data carried in the extended broadcast frame, and the data type field is set to a reserved value, for example, any value from 7 to 255, to indicate that the extended broadcast frame carries the ranging parameter information. It may be understood that, in this case, the narrowband communication module in the first device sends the second message in a broadcast manner.

With reference to the second aspect, in a possible implementation, the ranging parameter information is carried in a payload (payload) of the second message; and before the narrowband communication module in the second device receives a second message sent by the narrowband communication module in the first device, the method further includes: The narrowband communication module in the second device sends an access request message, where the access request message is used to request to establish a connection to the narrowband communication module in the first device; and the narrowband communication module in the second device receives an access response message sent by the narrowband communication module in the first device, where the access response message is used to agree to a request of the access request message.

With reference to the second aspect, in a possible implementation, the ranging parameter information is content included in a payload (payload) information element (IE) in ranging control information (RCM). For example, the ranging parameter information includes but is not limited to one or more of the following: a ranging method, an identifier of a ranging device, a ranging role of a ranging device, a ranging mode, a ranging frame format, ranging slot assignment, an angle measurement requirement, or a measurement value report manner.

With reference to the second aspect, in a possible implementation, after the narrowband communication module in the second device receives a second message sent by the narrowband communication module in the first device, the method further includes: The narrowband communication module in the second device transmits the ranging parameter information to the UWB module in the second device.

With reference to the second aspect, in a possible implementation, after the narrowband communication module in the second device transmits the ranging parameter information to the UWB module in the second device, the method further includes: The UWB module in the second device sends a first ranging frame based on the ranging parameter information, and the UWB module in the second device receives a second ranging frame sent by a UWB module in the first device.

With reference to the second aspect, in a possible implementation, after the UWB module in the second device sends a first ranging frame based on the ranging parameter information, the method further includes: The narrowband communication module in the second device receives a third message sent by the narrowband communication module in the first device, where the third message carries a first ranging result, and the first ranging result includes receiving time of the first ranging frame and sending time of the second ranging frame.

Optionally, the first ranging result further includes reliability of the receiving time of the first ranging frame.

Optionally, when the angle measurement requirement in the ranging parameter information is that there is a positioning requirement, that is, a relative angle (or a relative orientation) needs to be measured, the first ranging result further includes one or more of the following: spatial positioning coordinates ($x_1$, $y_1$, $z_1$) of the first device, relative positioning coordinates ($x_{21}$, $y_{21}$, $z_{21}$) of the second device relative to the first device, an AOA horizontal angle of the second device relative to the first device, or an AOA elevation angle of the second device relative to the first device.

With reference to the second aspect, in a possible implementation, after the UWB module in the second device receives a second ranging frame sent by a UWB module in the first device, the method further includes: The narrowband communication module in the second device sends a fourth message, where the fourth message carries a second ranging result, and the second ranging result includes receiving time of the second ranging frame and sending time of the first ranging frame.

Optionally, before the narrowband communication module in the second device sends a fourth message, the method further includes: The UWB module in the second device transmits the second ranging result to the narrowband communication module in the second device.

Optionally, the second ranging result further includes reliability of the receiving time of the second ranging frame.

Optionally, when the angle measurement requirement in the ranging parameter information is that there is a positioning requirement, that is, a relative angle (or a relative orientation) needs to be measured, the second ranging result further includes one or more of the following: spatial positioning coordinates ($x_2$, $y_2$, $z_2$) of the second device, relative positioning coordinates ($x_{12}$, $y_{12}$, $z_{12}$) of the first device relative to the second device, an AOA horizontal angle of the first device relative to the second device, or an AOA elevation angle of the first device relative to the second device.

According to a third aspect, this application provides a communication apparatus. The communication apparatus is specifically a first device or a chip in the first device, and the communication apparatus is configured to perform the method according to any one of the first aspect or the possible implementations of the first aspect. The communication apparatus includes units that perform the method according to any one of the first aspect or the possible implementations of the first aspect.

According to a fourth aspect, this application provides a communication apparatus. The communication apparatus is specifically a second device or a chip in the second device, and the communication apparatus is configured to perform the method according to any one of the second aspect or the possible implementations of the second aspect. The communication apparatus includes units that perform the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to the apparatus embodiments provided below. For beneficial effect of the third aspect and the fourth aspect, refer to related descriptions of the first aspect and the second aspect. Details are not described herein again.

According to a fifth aspect, this application provides a communication apparatus. The communication apparatus includes a narrowband communication circuit and a UWB circuit. The narrowband communication circuit is configured to perform steps, functions, or the like performed by the narrowband communication module in the first device according to any one of the first aspect or the possible implementations of the first aspect. The UWB circuit is configured to perform steps, functions, or the like performed by the UWB module in the first device according to any one of the first aspect or the possible implementations of the first aspect. For specific descriptions of the narrowband communication circuit and the UWB circuit, refer to the following apparatus embodiments.

According to a sixth aspect, this application provides a communication apparatus. The communication apparatus includes a narrowband communication circuit and a UWB circuit. The narrowband communication circuit is configured to perform steps, functions, or the like performed by the narrowband communication module in the second device according to any one of the second aspect or the possible implementations of the second aspect. The UWB circuit is configured to perform steps, functions, or the like performed by the UWB module in the second device according to any one of the second aspect or the possible implementations of the second aspect. For specific descriptions of the narrowband communication circuit and the UWB circuit, refer to the following apparatus embodiments.

According to a seventh aspect, this application provides a system on chip (system on chip, SoC) chip. The SoC chip includes a transceiver, a processor, and an internal memory and an external memory that are coupled to the processor. The transceiver is configured to receive and send messages. The processor is configured to execute program instructions stored in the internal memory and the external memory, so that the SoC chip performs the method according to any one of the first aspect or the possible implementations of the first aspect, or the method according to any one of the second aspect or the possible implementations of the second aspect. The SoC chip may include a chip, or may include a chip and another discrete component.

According to an eighth aspect, an embodiment of this application provides a computer-readable storage medium. The computer-readable storage medium is configured to store a computer program. When the computer program is run on a computer, the method according to any one of the first aspect or the possible implementations of the first aspect is performed.

According to a ninth aspect, an embodiment of this application provides a computer-readable storage medium. The computer-readable storage medium is configured to store a computer program. When the computer program is run on a computer, the method according to any one of the second aspect or the possible implementations of the second aspect is performed.

According to a tenth aspect, an embodiment of this application provides a computer program product. The computer program product includes a computer program or computer code. When the computer program product runs on a computer, the method according to any one of the first aspect or the possible implementations of the first aspect is performed.

According to an eleventh aspect, an embodiment of this application provides a computer program product. The computer program product includes a computer program or computer code. When the computer program product runs on a computer, the method according to any one of the second aspect or the possible implementations of the second aspect is performed.

According to a twelfth aspect, an embodiment of this application provides a computer program. When the computer program is run on a computer, the method according to any one of the first aspect or the possible implementations of the first aspect is performed.

According to a thirteenth aspect, an embodiment of this application provides a computer program. When the computer program is run on a computer, the method according to any one of the second aspect or the possible implementations of the second aspect is performed.

According to a fourteenth aspect, an embodiment of this application provides a communication system. The communication system includes a first device and a second device. The first device is configured to perform the method according to any one of the first aspect or the possible implementations of the first aspect. The second device is configured to perform the method according to any one of the second aspect or the possible implementations of the second aspect.

In embodiments of this application, the two communication parties (the first device and the second device) broadcast or negotiate a ranging-related parameter (the ranging parameter information in this application) using respective narrowband communication modules (such as Wi-Fi, NFC, Bluetooth, or Zigbee (a ZigBee protocol)), so that the UWB modules in the two communication parties (the first device and the second device) perform ranging based on the ranging parameter information determined through broadcast or negotiation. This reduces operating time of the UWB module, and power consumption; and reduces implementation complexity of the UWB module, and costs.

## BRIEF DESCRIPTION OF DRAWINGS

To describe technical solutions of embodiments of this application more clearly, the following briefly describes accompanying drawings for describing embodiments.

FIG. 1 is a diagram of an architecture of a ranging and positioning system according to an embodiment of this application;

FIG. 2 is a diagram of a ranging principle according to an embodiment of this application;

FIG. 3 is a diagram of a UWB ranging procedure according to an embodiment of this application;

FIG. 4 is a schematic flowchart of an information exchanging method according to an embodiment of this application;

FIG. 5 is a diagram of a frame format of an extended broadcast frame according to an embodiment of this application;

FIG. 6 is a schematic flowchart of narrowband-assisted broadband ranging according to an embodiment of this application;

FIG. 7 is another schematic flowchart of narrowband-assisted broadband ranging according to an embodiment of this application;

FIG. 8 is still another schematic flowchart of narrowband-assisted broadband ranging according to an embodiment of this application;

FIG. 9 is a diagram of a structure of a communication apparatus according to an embodiment of this application;

FIG. 10 is a diagram of another structure of a communication apparatus according to an embodiment of this application;

FIG. 11 is a diagram of a structure of a communication apparatus 1000 according to an embodiment of this application; and

FIG. 12 is a diagram of another structure of a communication apparatus according to an embodiment of this application.

## DESCRIPTION OF EMBODIMENTS

The following clearly and completely describes technical solutions in embodiments of this application with reference to accompanying drawings in embodiments of this application.

In this application, the terms "first", "second", and so on are intended to distinguish between different objects but do not indicate a particular order of the objects. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item) "means one or more, "a plurality of" means two or more, and "at least two (items)" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, the term "example", "for example", or the like is used to represent giving an example, an illustration, or a description Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

In this application, an element represented in a singular form is intended to represent "one or more", but does not represent "one and only one", unless otherwise specified.

The technical solutions provided in this application are applicable to a UWB-based wireless personal area network (wireless personal area network, WPAN). For example, a method provided in this application is applicable to institute of electrical and electronics engineers (institute of electrical and electronics engineers, IEEE) 802.15 series protocols, for example, the 802.15.4a protocol, the 802.15.4z protocol, the 802.15.4ab protocol, or a future generation of UWB WPAN standard. Examples are not enumerated herein. The method provided in this application is further applied to various communication systems, for example, internet of things (internet of things, IoT), vehicle to X (vehicle to X, V2X), narrowband internet of things (narrowband internet of things, NB-IoT), and is applied to vehicle to X devices, internet of things (IoT, internet of things) nodes and sensors, smart cameras, smart remote controller, smart water meters in smart home, and sensors in smart city. The method provided in this application is also applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th-generation (5th-generation, 5G) communication system, a 6th-generation (6th-generation, 6G) communication system, or the like.

An ultra-wideband (UWB) technology, which is a new wireless communication technology, transmits data using nanosecond-level non-sinusoidal narrow impulses, and performs modulation on impulses with very steep rise and fall time. Therefore, a wide spectrum range is occupied for the technology, allowing signals to have a gigahertz (GHz) bandwidth. A UWB system has a very wide spectrum and very low average power spectrum density, and has advantages of strong multi-path resolution, low power consumption, high confidentiality, and the like. Therefore, this is conducive to coexistence with other systems, and helps improv spectrum utilization and system capacity. In addition, in short-range communication application, an ultra-wideband (UWB) transmitter may have a transmit power lower than 1 mW (milliwatt). Theoretically, interference generated by ultra-wideband (UWB) signals is equivalent to white noise for a narrowband system. This helps good coexistence between ultra-wideband and existing narrowband communication. Therefore, the UWB system and a narrowband (narrowband, NB) communication system can operate at the same time without interfering with each other.

Although embodiments of this application are mainly described by using a WPAN as an example, for example, a network used in IEEE 802.15 series standards is used as an example for description. A person skilled in the art easily understands that, various aspects in this application may be extended to other networks using various standards or protocols, for example, a wireless local area network (wireless local area network, WLAN), Bluetooth (BLUETOOTH), Zigbee (a ZigBee protocol), near field communication (near field communication, NFC), high performance wireless LAN (High Performance Radio LAN, HIPERLAN) (a wireless standard similar to the IEEE 802.11 standard, which is mainly used in Europe), a wide area network (WAN), or another network that is currently known or developed in the future. Therefore, regardless of used coverage and a used wireless access protocol, various aspects provided in this application are applicable to any appropriate wireless network.

The method provided in this application may be implemented by a communication apparatus in a wireless communication system. The communication apparatus may be an apparatus in a UWB system. For example, the communication apparatus may include but is not limited to a communication server, a router, a switch, a bridge, a computer, a mobile phone, and the like that support a UWB technology and a narrowband communication technology (including but not limited to Wi-Fi, Bluetooth, NFC, and Zigbee). For another example, the communication apparatus may include user equipment (user equipment, UE). The user equipment may include various handheld devices that support a UWB technology and a narrowband communication technology, a vehicle-mounted device (for example, a car or a component installed in a car), a wearable device, an internet of things (internet of things, IoT) device, a computing device, another processing device connected to a wireless modem, or the like. Examples are not enumerated herein. For still another example, the communication apparatus may include a central control point, for example, a personal local area network (personal area network, PAN) or a PAN coordinator (coordinator). The PAN coordinator or the PAN may be a mobile phone, a vehicle-mounted device, an anchor (Anchor), a tag (tag), a smart home, or the like. For yet another example, the communication apparatus may include a chip, and the chip may be disposed in a communication server, a router, a switch, a terminal device, or the like. Examples are not enumerated herein. It may be understood that the foregoing descriptions about the communication apparatus are applicable to a first device and a second device in this application.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

The technical solutions provided in this application are applied to a ranging and positioning scenario in wireless communication sensing. In the ranging and positioning scenario, two ranging parties may perform authentication and negotiation according to a related protocol to establish a wireless communication connection. After the wireless communication connection is established, a transmitting end sends a wireless ranging frame to a receiving end. After receiving the wireless ranging frame, the receiving end calculates time of arrival, and returns another ranging radio frame to the transmitting end. A distance between the two parties (the transmitting end and the receiving end) is calculated by calculating time of flight (time of flight, ToF), to complete a ranging process.

In embodiments of this application, the term "transmission" may refer to information exchange inside a device, a chip, or an apparatus.

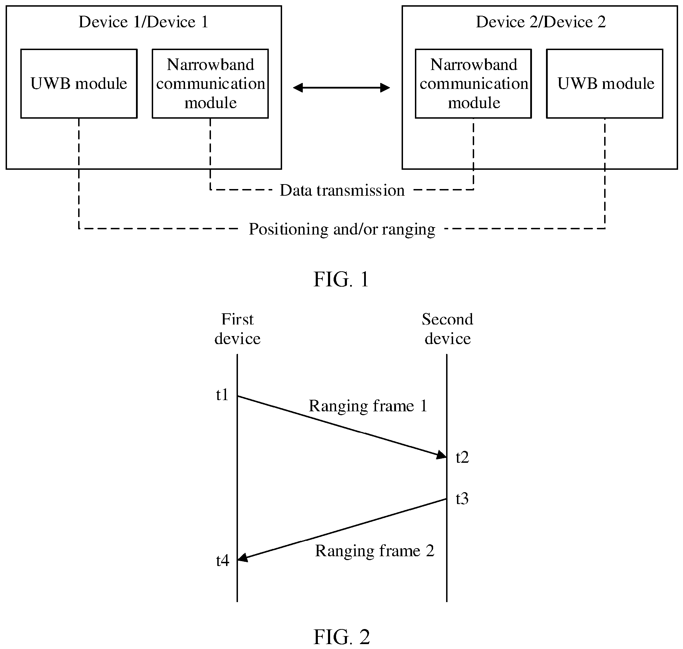

FIG. 1 is a diagram of an architecture of a ranging and positioning system according to an embodiment of this application. As shown in FIG. 1, the ranging and positioning system includes a plurality of devices (for example, a device 1 and a device 2 in FIG. 1), and each device includes at least a UWB module and a narrowband communication module. Positioning and/or ranging may be performed between the UWB modules in the device 1 and the device 2, and data transmission may be performed between the narrowband communication modules in the device 1 and the device 2 through a radio link.

In this application, the UWB module may be understood as an apparatus, a chip, a system, or the like that implements a UWB technology. Correspondingly, the narrowband communication module may be understood as an apparatus, a chip, a system, or the like that implements a narrowband communication technology (such as Wi-Fi, Bluetooth, or Zigbee (a ZigBee protocol)). In one device (device), a UWB module and a narrowband communication module may be different apparatuses or chips. Certainly, the UWB module and the narrowband communication module may alternatively be integrated into one apparatus or chip. Embodiments of this application do not limit an implementation of the UWB module and the narrowband communication module in the device.

The following briefly describes some content, terms, or nouns related to this application.

1. Basic principle of ranging

A basic principle of ranging is that a distance between two parties is calculated based on round-trip time of measurement messages. A transmitting end sends a ranging frame carrying a ranging sequence. A receiving end performs a correlation operation on the ranging sequence in the received ranging frame and a locally stored sequence, and obtains time of arrival (namely, t2 and t4) based on locations of correlation peaks. FIG. 2 is a diagram of a ranging principle according to an embodiment of this application. As shown in FIG. 2, a first device sends a ranging frame 1 at a moment t1, and the ranging frame 1 arrives at a second device at a moment t2; and the second device sends a ranging frame 2 to the first device at a moment t3, and the ranging frame 2 arrives at the first device at a moment t4.

In this case, a distance d between the first device and the second device may be calculated according to the following Formulas (1-1), (1-2), and (1-3):

$$d = \frac{(t_{RTT} - t_{reply})}{2} \times c \qquad (1\text{-}1)$$

$$t_{RTT} = (t4 - t1) \qquad (1\text{-}2)$$

$$t_{reply} = (t3 - t2) \qquad (1\text{-}3)$$

Herein, c represents a light speed.

For a specific frame format of the ranging frame mentioned in this application, refer to descriptions of existing 802.15 series protocols (for example, 802.15.4a, 802.15.4z, or 802.15.4ab). Details are not described herein.

2. UWB ranging procedure

A UWB system, typically driven by narrowband signals like near field communication (near field communication, NFC), Bluetooth, Zigbee, or Wi-Fi, wakes up a UWB module in a user requirement scenario; and the waked-up UWB module constructs a personal area network, allocates time division multiple access (time division multiple address, TDMA) slots, and completes ranging and positioning functions.

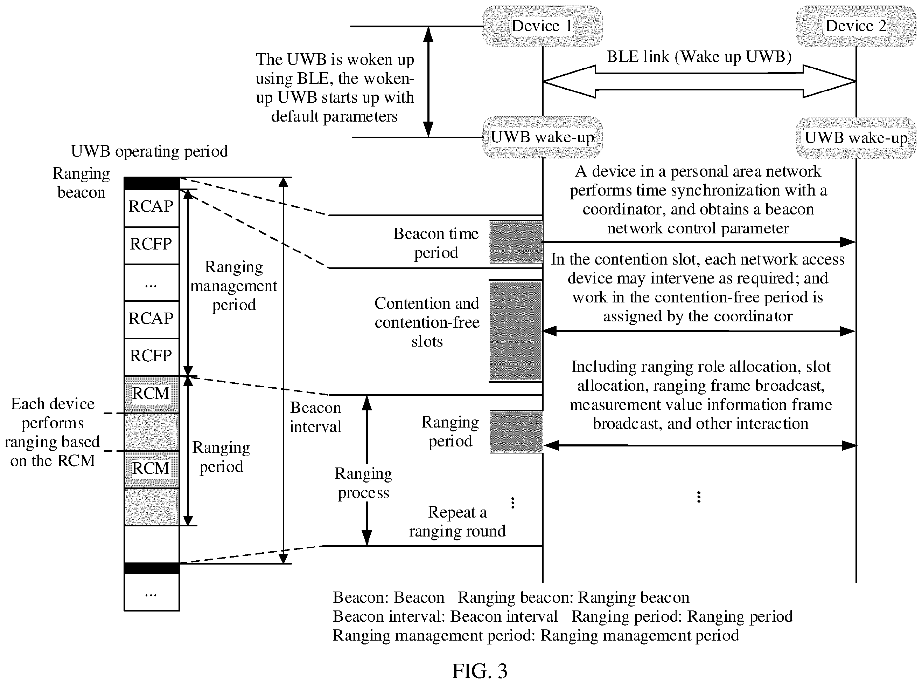

FIG. 3 is a diagram of a UWB ranging procedure according to an embodiment of this application. In FIG. 3, two devices are used as an example, and the two devices each include a UWB module. As shown in FIG. 3, a beacon (beacon) interval (beacon interval) may include three time periods: a beacon time period, a ranging management period (ranging management period), and a ranging period (ranging period). The ranging management period includes one or more ranging contention access periods (ranging contention access periods, RCAPs) and one or more ranging contention-free periods (ranging contention-free periods, RCFPs). The ranging management period is also referred to as contention and contention-free slots.

The UWB ranging procedure shown in FIG. 3 includes the following content.

The UWB module in the device wakes up through Bluetooth low energy (Bluetooth low energy, BLE) before startup, and the waked-up UWB module starts up with default parameters including an initialized channel number (channel number), synchronization code (preamble code), a rate, and the like.

After being woken up and startup, the UWB modules in the device 1 and the device 2 perform networking and ranging. In the beacon time period within the beacon interval, the device 1, which is defined as a coordinator (coordinator), is responsible for sending of a beacon frame, so as to implement time synchronization of a UWB personal area network (PAN) and broadcast of network parameters. After receiving the beacon frame, the device 2 joins the personal area network of the device 1 (the coordinator) as required. The device 1 (the coordinator) may further indicate, via the beacon frame, whether the ranging management period (namely, the contention and contention-free slot) is required. If the ranging management period (ranging management period) is required, another device (for example, a device n) may access, in this time period, the personal area network constructed by the device 1. If the ranging management period is not required, the current personal area network and the related devices in the personal area network are maintained. The ranging contention access period (RCAP) may be used for network access (access to a personal area network) of a device, and the ranging contention-free period (ranging contention-free period, RCFP) is used for slot assignment for interaction between devices. In other words, network access of a device and interaction with a specified device are completed in the ranging management period.

In the ranging period (ranging period), four roles are defined in total. The device 1 serves as both a controller (controller) and an initiator (initiator), and the device 2 serves as both a controllee (controllee) and a responder (responder). The controller is responsible for sending ranging control information (ranging control message, RCM), where the RCM includes ranging roles (which device participating in the ranging is used as an initiator and which device participating in the ranging is used as a responder), and ranging slot assignment (TDMA-based time slice assignment), and the like. Then, the initiator sends an initial ranging frame. After receiving the initial ranging frame, the responder feeds back a ranging frame to the initiator. Each of the devices calculates time of arrival (receiving time) of a ranging frame, and then broadcasts a ranging result by using a UWB technology. The ranging result includes the time of arrival of the ranging frame, and ranging between devices is completed based on the ranging result. For example, a distance between the devices is calculated according to the foregoing Formulas (1-1), (1-2), and (1-3). Repeat the foregoing steps for a new ranging round.

For a frame format of the ranging control information (RCM), refer to descriptions in the conventional technology. Details are not described herein.

It can be learned from the UWB ranging procedure shown in FIG. 3 that, although the UWB system wakes up the UWB module in the device through BLE in a user requirement scenario, the waked-up UWB module needs to construct the personal area network, perform TDMA-based slot assignment, and complete ranging and positioning functions. In this case, the UWB module needs to operate for a long time, and accordingly has high power consumption. In addition, the waked-up UWB module needs to implement both communication (for example, personal area network construction and TDMA-based slot assignment) and ranging functions, and it is complex to implement.

Therefore, embodiments of this application provide an information exchanging method, applied to a ranging and positioning scenario in the wireless communication sensing field. In this method, a narrowband communication module in a device implements a communication function (for example, ranging role negotiation and TDMA-based slot assignment) of a UWB module, and the UWB module is only responsible for a ranging function (for example, receiving and sending ranging frames, or calculating time of arrival of a ranging frame or a distance between devices). This reduces complexity of the UWB module and reduces power consumption of the UWB module. In other words, in the method provided in embodiments of this application, two communication parties (a first device and a second device) interact or negotiate ranging-related parameters (including ranging slot (the foregoing TDMA-based slot) assignment) using respective narrowband communication modules (such as Wi-Fi, NFC, Bluetooth, or Zigbee (a ZigBee protocol)). This reduces operating time and power consumption of the UWB modules, makes the UWB modules less complex in implementation, and reduces costs. Further, the UWB modules in the two communication parties (the first device and the second device) are only responsible for ranging.

The following describes in detail the technical solutions provided in this application with reference to more accompanying drawings.

In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

Optionally, the first device and the second device in this application may be different electronic devices. For example, the first device is the device 1 in FIG. 1, and the second device is the device 2 in FIG. 1. The first device includes at least a narrowband communication module, and optionally, further includes a UWB module. The second device includes at least a UWB module and a narrowband communication module. In some embodiments, the first device and the second device may be located at different geographical locations, that is, the distance d between the first device and the second device may not be 0.

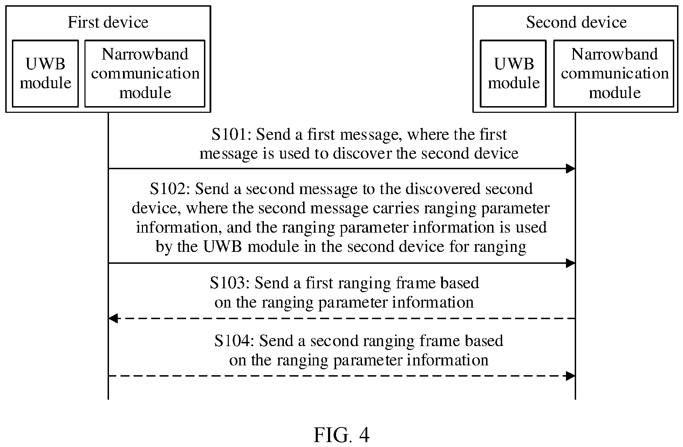

FIG. 4 is a schematic flowchart of an information exchanging method according to an embodiment of this application. Both a first device and a second device support 802.15 series standards, for example, the 802.15.4a protocol, the 802.15.4z protocol, the 802.15.4ab protocol, or a future generation of UWB WPAN standard. The first device and the second device further support narrowband communication standards, for example, a Wi-Fi standard (that is, 802.11 series standards), an NFC standard, a Bluetooth standard, or Zigbee.

As shown in FIG. 4, the information exchanging method includes but is not limited to the following steps.

S101: A narrowband communication module in the first device sends a first message, where the first message is used to discover the second device.

Correspondingly, a narrowband communication module in the second device receives the first message.

S102: The narrowband communication module in the first device sends a second message to the discovered second device, where the second message carries ranging parameter information, and the ranging parameter information is used by a UWB module in the second device for ranging.

Correspondingly, the narrowband communication module in the second device receives the second message.

In a possible implementation, the narrowband communication module in the first device broadcasts the first message, where the first message is used to discover the device. The device receiving the first message (for ease of description, the device receiving the first message is denoted as the second device) may send a request message using the narrowband communication module in the device, where the request message may carry information such as an identifier, an address, or a sequence number of the device, and the request message may be used to request the first device to broadcast more information. After the narrowband communication module in the first device receives the request message, because the request message carries the information such as the identifier, the address, or the sequence number of the second device, the first device may discover the second device based on the request message. Because there may be a plurality of devices that receive the first messages, and a plurality of devices may all send the request messages, the narrowband communication module in the first device may receive a plurality of request messages, and discover a plurality of devices.

When a user has a UWB ranging and positioning requirement or triggers a UWB ranging and positioning function, the narrowband communication module in the first device may obtain the ranging parameter information configured by an upper layer, or the narrowband communication module in the first device obtains the ranging parameter information from a UWB module in the first device. Then, the narrowband communication module in the first device may broadcast the second message to one or more discovered second devices, where the second message carries the ranging parameter information, and the ranging parameter information includes various ranging parameters used in a ranging process, such as a ranging role and ranging slot assignment. The ranging parameter information may be used by the UWB module in the second device for ranging. For details about how for ranging based on the ranging parameter information, refer to the following description. The second message may be an extended broadcast frame, and the ranging parameter information may be carried in a data content field in the extended broadcast frame. In other words, the narrowband communication module in the first device may pack and fill the obtained ranging parameter information into the data content field in the extended broadcast frame, and send the extended broadcast frame in a broadcast manner.

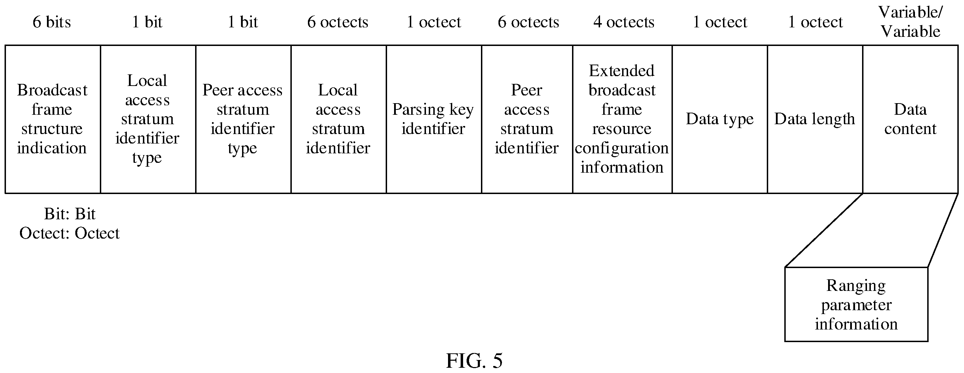

For example, FIG. 5 is a diagram of a frame format of the extended broadcast frame according to this embodiment of this application. As shown in FIG. 5, the extended broadcast frame includes but is not limited to a data type field and the data content field, and optionally further includes one or more of the following fields: a broadcast frame structure indication, a local access stratum identifier type, a peer access stratum identifier type, a local access stratum identifier, a parsing key identifier, a peer access stratum identifier, extended broadcast frame resource configuration information, or a data length. The data content field carries the ranging parameter information. For example, content (the ranging parameter information in this application) included in a payload (payload) information element (information element, IE) in ranging control information (RCM) is carried in the data content field in the extended broadcast frame. The data type field indicates a type of broadcast data carried in the extended broadcast frame. When a value of the data type field is 0, it indicates that the data content field carries sending resource configuration information. When a value of the data type field is 1, it indicates that the data content field carries information indicating that transmission of a system management frame is not started. When a value of the data type field is 2, it indicates that the data content field carries basic information for starting access of a system management frame. When a value of the data type field is 3, it indicates that the data content field carries access request information. When a value of the data type field is 4, it indicates that the data content field carries access response information. When a value of the data type field is 5, it indicates that the data content field carries start system management frame information. When a value of the data type field is 6, it indicates that the data content field carries a non-connected-state broadcast link information. When the data type field is set to a reserved value, for example, the data type field is set to any value from 7 to 255 (including 7 and 255), it indicates that the data type field in the extended broadcast frame carries ranging-related information, for example, the ranging parameter information in this application. It should be understood that, for values and meanings of other fields (indicating fields other than the data type field and the data content field) in the extended broadcast frame, refer to descriptions in the conventional technology. Details are not described herein.

It may be understood that lengths and names of fields shown in FIG. 5 are merely examples. This is not limited in this embodiment of this application.

Optionally, after the narrowband communication module in each second device receives the extended broadcast frame (namely, the second message), each second device may parse the extended broadcast frame to obtain the ranging parameter information in the extended broadcast frame. For example, with reference to the frame format shown in FIG. 5, the narrowband communication module in the second device parses the extended broadcast frame. When the data type field is obtained through parsing, because the data type field is set to the value from 7 to 255, it may be learned that the subsequent data content field carries the ranging-related information (for example, the ranging parameter information in this application). The narrowband communication module in the second device continues to perform parsing. When the data length field is obtained through parsing, a length of the subsequent data content field may be learned. However, because the data content field carries the ranging parameter information, the narrowband communication module in the second device may not correctly parse the data content field, and the narrowband communication module in the second device may transmit, to the UWB module in the second device, content (namely, the data content field) that meets the length indicated by the data length field and that is after the data length field. Then, the UWB module in the second device parses the data content field to obtain the ranging parameter information carried in the data content field. That the narrowband communication module in the second device parses the extended broadcast frame may be understood as that the second device parses the extended broadcast frame according to the narrowband communication standard. Similarly, that the UWB module in the second device parses the data content field may be understood as that the second device parses the data content field according to a UWB standard. In other words, the second device parses, according to the narrowband communication standard, the fields before the data content field in the extended broadcast frame, and the second device parses, according to a UWB standard, the data content field in the extended broadcast frame.

Optionally, the first message and the second message may be one message, that is, the ranging parameter information may also be carried in the message used to discover the device. In other words, the narrowband communication module in the first device may broadcast a message, where the message is not only used to discover the device, but also carries the ranging parameter information.

In this embodiment of this application, the ranging parameter information is sent in the broadcast manner, so that a plurality of devices all can be allowed for ranging. For example, one device performs ranging with a plurality of devices, or a plurality of devices perform ranging with a plurality of devices. This can improve ranging efficiency.

In another possible implementation, the narrowband communication module in the first device broadcasts the first message, where the first message is used to discover the device. When the device (for ease of description, the device is denoted as the second device) that receives the first message wants to establish a connection to the first device, the second device may send an access request message using the narrowband communication module in the second device, where the access request message is used to request to establish the connection to the narrowband communication module in the first device. After receiving the access request message, the narrowband communication module in the first device may send an access response message, where the access response message is used to agree to a request of the access request message. After the narrowband communication module in the second device receives the access response message, the connection between the narrowband communication module in the first device and the narrowband communication module in the second device is established.

After the connection between the first device and the second device is established, the first device and the second device may determine, through negotiation using respective narrowband communication modules, various ranging parameters used in a ranging process, that is, negotiate the ranging parameter information. For example, the narrowband communication module in the first device sends a second message to the second device, where the second message carries ranging parameter information determined by the first device, and the ranging parameter information includes various ranging parameters used in a ranging process, such as a ranging role and ranging slot assignment. If the second device agrees to perform ranging based on the ranging parameter information carried in the second message, the narrowband communication module in the second device may reply with an acknowledgment message to confirm the ranging parameter information carried in the second message; or the second device does not need to reply with an acknowledgment message, and the UWB module in the second device performs the ranging based on the ranging parameter information carried in the second message. Alternatively, if the second device does not agree to perform ranging based on the ranging parameter information carried in the second message, the narrowband communication module in the second device may send a message i carrying ranging parameter information determined by the second device. If the first device agrees to perform ranging based on the ranging parameter information carried in the message i, the narrowband communication module in the first device may reply with an acknowledgment message to confirm the ranging parameter information carried in the message i; or the first device does not need to reply with an acknowledgment message, and the UWB module in the first device performs the ranging based on the ranging parameter information carried in the message i. If the first device does not agree to perform ranging based on the ranging parameter information carried in the message i, negotiation continues.

The ranging parameter information may be carried in the second message or a payload (payload) of the message i. The ranging parameter information determined by the first device and the second device through negotiation using respective narrowband communication modules may be used by the UWB module in the first device and the UWB module in the second device for ranging. For details about how to perform ranging based on the ranging parameter information, refer to the following descriptions.

Optionally, the ranging parameter information may be configured by the upper layer, or may be generated by the UWB module.

In embodiments of this application, the first device and the second device first establish the connection using respective narrowband communication modules, and then negotiate and determine the ranging parameter information in a connected state, to support one-to-one ranging. The ranging parameter information is determined by the first device and the second device through negotiation. This is more helpful for both parties to learn of information (for example, capability information) of each other, and facilitates implementation of the subsequent ranging process.

Optionally, the ranging parameter information in the foregoing two implementations may be content included in a payload (payload) information element (information element, IE) in ranging control information (RCM). For example, the ranging parameter information includes but is not limited to one or more of the following: a ranging method, an identifier of a ranging device, a ranging role of a ranging device, a ranging mode, a ranging frame format, ranging slot assignment, an angle measurement requirement, or a measurement value report manner. The ranging method includes single-sided two-way ranging (single-sided two-way ranging, SS-TWR) and double-sided two-way ranging (double-sided two-way ranging, DS-TWR). For specific implementation of the SS-TWR and the DS-TWR, refer to the conventional technology. Details are not described herein. The identifier of the ranging device may be a medium access control (medium access control, MAC) address, an ID (identifier, identifier), or the like of each device participating in the ranging. The ranging role of the ranging device may indicate that which devices are initiators and which devices are responders among devices participating in the ranging. The ranging mode includes one or more of ranging between one device and one device (namely, one-to-one ranging), ranging between one device and a plurality of devices (namely, one-to-many ranging), or ranging between a plurality of devices and a plurality of devices (namely, many-to-many ranging). The angle measurement requirement may be understood as whether there is a positioning requirement, whether there is a requirement for measuring a relative angle (or a relative orientation), or whether an angle of arrival (Angle of Arrival, AoA) horizontal angle and an AoA elevation angle of the first device relative to the second device (or the second device relative to the first device) need to be measured. The measurement value report manner may indicate whether a measurement value (or a ranging result) is transmitted from an initiator to a responder, or transmitted from a responder to an initiator.

It may be understood that, in the second implementation of the foregoing two implementations, the ranging mode included in the ranging parameter information is one-to-one ranging, and the identifier of the ranging device includes an identifier of the first device and an identifier of the second device, that is, both the first device and the second device participate in the ranging.

It may be understood that, in the first implementation of the foregoing two implementations, the first device may not participate in the ranging, and the ranging is performed between the plurality of second devices. In this case, the first device may not need the UWB module, and the ranging device includes the second device but does not include the first device. Certainly, in the first implementation, the first device may also participate in the ranging. In this case, the first device also includes the UWB module, and the ranging device includes the first device and the second device. In the first implementation, the ranging mode included in the ranging parameter information may be one-to-one ranging, one-to-many ranging, or many-to-many ranging.

For ease of description in this embodiment of this application, the following ranging process is described by using an example in which the first device and the second device perform one-to-one ranging. In other words, in the following described ranging process, the ranging mode in the ranging parameter information is one-to-one ranging, and the identifier of the ranging device includes the identifier of the first device and the identifier of the second device.

Optionally, after step S102, the information exchanging method further includes one or more of the following steps.

S103: The UWB module in the second device sends a first ranging frame based on the ranging parameter information.

Correspondingly, the UWB module in the first device receives the first ranging frame.

S104: The UWB module in the first device sends a second ranging frame based on the ranging parameter information.

Correspondingly, the UWB module in the second device receives the second ranging frame.

Optionally, if the ranging method in the ranging parameter information is the S S-TWR, the UWB module in the first device and the UWB module in the second device perform the ranging according to an SS-TWR method. For details about the SS-TWR method, refer to descriptions in the conventional technology. Details are not described herein. If the ranging method in the ranging parameter information is the DS-TWR, the UWB module in the first device and the UWB module in the second device perform the ranging according to a DS-TWR method. For details about the DS-TWR method, refer to descriptions in the conventional technology. Details are not described herein. For ease of description in this embodiment of this application, descriptions are provided by using an example in which the ranging method in the ranging parameter information is the SS-TWR.

Optionally, in the ranging parameter information, the ranging method is the SS-TWR, and the ranging mode is one-to-one ranging. If the ranging role of the ranging device in the ranging parameter information is that the second device is the initiator, and the first device is the responder, the UWB module in the second device sends the first ranging frame in a ranging slot (a TDMA-based slot) allocated or determined through negotiation, where a frame format of the first ranging frame is the same as a format of a ranging frame in the ranging parameter information. Correspondingly, the UWB module in the first device receives the first ranging frame. After the UWB module in the first device receives the first ranging frame, in one aspect, the UWB module in the first device sends the second ranging frame in a ranging slot (a TDMA-based slot) allocated or determined through negotiation, where a frame format of the second ranging frame is the same as a format of a ranging frame in the ranging parameter information. In another aspect, the UWB module in the first device may parse the first ranging frame based on the format of the ranging frame in the ranging parameter information, to obtain a ranging sequence in the first ranging frame. In addition, the first device may further perform a correlation operation on the ranging sequence and a locally stored ranging sequence, to obtain time of arrival (a receiving time) of the first ranging frame. It may be understood that an operation of the correlation operation may be performed in the UWB module, or may be performed in the narrowband communication module. This is not limited in this embodiment of this application. If the angle measurement requirement in the ranging parameter information is that there is the positioning requirement, that is, the relative angle (or the relative orientation) needs to be measured, after the UWB module in the first device receives the first ranging frame, the first device may measure the AOA horizontal angle and the AOA elevation angle of the second device relative to the first device, and may obtain spatial positioning coordinates $(x_1, y_1, z_1)$ of the first device or relative positioning coordinates $(x_{21}, y_{21}, z_{21})$ of the second device relative to the first device. It may be understood that operations of measuring the AOA horizontal angle and the AOA elevation angle of the second device relative to the first device, and obtaining the spatial positioning coordinates ($x_1$, $y_1$, $z_1$) of the first device or obtaining the relative positioning coordinates ($x_{21}$, $y_{21}$, $z_{21}$) of the second device relative to the first device may be performed in the UWB module, or may be performed in the narrowband communication module. This is not limited in this embodiment of this application.

After receiving the second ranging frame, the UWB module in the second device may parse the second ranging frame based on the format of the ranging frame in the ranging parameter information, to obtain a ranging sequence in the second ranging frame. In addition, the second device may further perform a correlation operation on the ranging sequence and a locally stored ranging sequence, to obtain time of arrival (receiving time) of the second ranging frame. If the angle measurement requirement in the ranging parameter information is that there is the positioning requirement, that is, the relative angle (or the relative orientation) needs to be measured, after the UWB module in the second device receives the second ranging frame, the second device may measure the AOA horizontal angle and the AOA elevation angle of the first device relative to the second device, and may obtain spatial positioning coordinates ($x_2$, $y_2$, $z_2$) of the second device or relative positioning coordinates ($x_{12}$, $y_{12}$, $z_{12}$) of the first device relative to the second device.

Optionally, in the ranging parameter information, the ranging method is the SS-TWR, and the ranging mode is one-to-one ranging. If the ranging role of the ranging device in the ranging parameter information is that the first device is the initiator, and the second device is the responder, a difference from the foregoing case that the second device is the initiator and the first device is the responder is that: The UWB module in the first device first sends a second ranging frame in a ranging slot (a TDMA-based slot) allocated or determined through negotiation, and then the UWB module in the second device replies with a first ranging frame in a ranging slot determined allocated or determined through negotiation. For an operation performed after the UWB module in the second device receives the second ranging frame, refer to the foregoing description. Details are not described herein again. Similarly, for an operation performed after the UWB module in the first device receives the first ranging frame, refer to the foregoing description. Details are not described herein again.

It may be understood that, regardless of whether the first device is used as the initiator or the second device is used as the initiator, the initiator first sends a ranging frame, and the responder replies with another ranging frame. It may be understood that, the difference between a case that the first device is the initiator and the second device is the responder and a case that the second device is the initiator and the first device is the responder lies in an execution sequence of step S103 and step S104. For example, when the second device is the initiator and the first device is the responder, step S103 is performed before step S104; or when the first device is the initiator and the second device is the responder, step S103 is performed after step S104.

Optionally, after the first device and the second device interact ranging frames using respective UWB modules (for example, after step S104), the first device and the second device may summarize a ranging result in the measurement value report manner in the ranging parameter information to one device for processing, to obtain a direct distance between the first device and the second device. In this embodiment of this application, an example in which the responder transmits the measurement value report manner to the initiator is used.

In a possible implementation, if the first device is the responder, and the second device is the initiator, the first device may summarize a ranging result to the second device, and then the second device determines the distance between the first device and the second device and/or relative locations between the first device and the second device based on summarized ranging results. For example, after step S104, the narrowband communication module in the first device may send a third message, where the third message carries a first ranging result. The first ranging result includes receiving time of the first ranging frame (time of arrival obtained by performing the operation of the correlation operation) and sending time of the second ranging frame. After receiving the third message, the narrowband communication module in the second device may calculate the distance between the first device and the second device according to the foregoing Formula (1-1) to the foregoing Formula (1-3) and based on the receiving time of the first ranging frame, sending time of the first ranging frame, the sending time of the second ranging frame, and receiving time of the second ranging frame. Optionally, the first ranging result may further include reliability of the receiving time of the first ranging frame. Reliability of the receiving time of the first ranging frame may be used to determine whether the receiving time is valid or reliable. When the receiving time of the first ranging frame is valid or reliable, the second device calculates the distance between the first device and the second device based on the receiving time of the first ranging frame, the sending time of the first ranging frame, the sending time of the second ranging frame, and the receiving time of the second ranging frame. Alternatively, if the receiving time of the first ranging frame is invalid or unreliable, the first device and the second device may re-perform a ranging process, for example, re-exchanging ranging frames. Certainly, the first device and the second device may further re-broadcast or re-negotiate ranging parameter information and then re-exchange ranging frames. This is not limited in this embodiment of this application.

Optionally, when the angle measurement requirement in the ranging parameter information is that there is the positioning requirement, that is, the relative angle (or the relative orientation) needs to be measured, the first ranging result may further include one or more of the following: the spatial positioning coordinates ($x_1$, $y_1$,

$z_1$) of the first device, the relative positioning coordinates ($x_{21}$, $y_{21}$, $z_{21}$) of the second device relative to the first device, the AOA horizontal angle of the second device relative to the first device, or the AOA elevation angle of the second device relative to the first device. After receiving the third message, the narrowband communication module in the second device may further determine the relative locations between the first device and the second device based on the spatial positioning coordinates ($x_1$, $y_1$, $z_1$) of the first device or the relative positioning coordinates ($x_{21}$, $y_{21}$, $z_{21}$) of the second device relative to the first device, the spatial positioning coordinates ($x_2$, $y_2$, $z_2$) of the second device, and the AOA horizontal angle and the AOA elevation angle of the second device relative to the first device.

It may be understood that, if all or some information included in the first ranging result is determined in the UWB module in the first device, before the narrowband communication module in the first device sends the third message, the UWB module in the first device needs to transmit the all or some information included in the first ranging result to the narrowband communication module in the first device. For example, it is assumed that the receiving time of the first ranging frame and the sending time of the second ranging frame are determined in the UWB module in the first device, and other information included in the first ranging result is determined in the narrowband communication module in the first device, the UWB module in the first device needs to transmit the receiving time of the first ranging frame and the sending time of the second ranging frame to the narrowband communication module in the first device.

In another possible implementation, if the first device is the initiator, and the second device is the responder, the second device summarizes a ranging result to the first device, and then the first device determines the distance between the second device and the first device and/or relative locations between the first device and the second device based on summarized ranging results. For example, the narrowband communication module in the second device may send a fourth message, where the fourth message carries a second ranging result. The second ranging result includes receiving time of the second ranging frame (time of arrival obtained by performing the operation of the correlation operation) and sending time of the first ranging frame. After receiving the fourth message, the narrowband communication module in the first device may calculate the distance between the first device and the second device according to the foregoing Formula (1-1) to the foregoing Formula (1-3) and based on receiving time of the first ranging frame, the sending time of the first ranging frame, sending time of the second ranging frame, and the receiving time of the second ranging frame. Optionally, the first ranging result may further include reliability of the receiving time of the first ranging frame.

Optionally, when the angle measurement requirement in the ranging parameter information is that there is the positioning requirement, that is, the relative angle (or the relative orientation) needs to be measured, the second ranging result may further include one or more of the following: the spatial positioning coordinates ($x_2$, $y_2$, $z_2$) of the second device, the relative positioning coordinates ($x_{12}$, $y_{12}$, $z_{12}$) of the first device relative to the second device, the AOA horizontal angle of the first device relative to the second device, or the AOA elevation angle of the first device relative to the second device. After receiving the fourth message, the narrowband communication module in the first device may further determine the relative locations between the first device and the second device based on the spatial positioning coordinates ($x_2$, $y_2$, $z_2$) of the second device or the relative positioning coordinates ($x_{12}$, $y_{12}$, $z_{12}$) of the first device relative to the second device, the spatial positioning coordinates ($x_1$, $y_1$, $z_1$) of the first device, and the AOA horizontal angle and the AOA elevation angle of the first device relative to the second device.

It may be understood that, if all or some information included in the second ranging result is determined in the UWB module in the second device, before the narrowband communication module in the second device sends the fourth message, the UWB module in the second device needs to transmit the all or some information included in the second ranging result to the narrowband communication module in the second device.

Optionally, in this embodiment of this application, when the narrowband communication module in the device works, the UWB module in the device may enter a sleep state; or when the UWB module in the device works, the narrowband communication module in the device may enter a sleep state. This reduces power consumption. In other words, in the foregoing step S101 and step S102, when the narrowband communication modules in the first device and the second device work, the UWB modules in the first device and the second device may enter a sleep state. This reduces power consumption. When the UWB module needs to work, the UWB module may be woken up using the narrowband communication module. For example, before step S103 and step S104, the first device and the second device wake up their own UWB modules. After the first device and the second device wake up the UWB modules, the narrowband communication modules in the first device and the second device may enter the sleep state. This further reduces power consumption. The narrowband communication module is woken up when the narrowband communication module needs to work. It can be learned that, in this embodiment of this application, when one module (the UWB module or the narrowband communication module) in the device works, the other module (the narrowband communication module or the UWB module) in the device sleeps. This further reduces power consumption.

In this embodiment of this application, the two communication parties (the first device and the second device) broadcast or negotiate a ranging-related parameter (the ranging parameter information in this application) using respective narrowband communication modules (such as Wi-Fi, NFC, Bluetooth, or Zigbee (the ZigBee protocol)), so that the UWB modules in the two communication parties (the first device and the second device) perform ranging based on the ranging parameter information determined through broadcast or negotiation. This reduces operating time of the UWB module, and power consumption; and reduces implementation complexity of the UWB module, and costs.

To better understand the technical solutions provided in embodiments of this application, the following uses several examples for description. In the following examples, one-to-one ranging is performed by two devices. A first device includes a narrowband (narrowband, NB) communication module and a UWB module, and the second device also includes a UWB module and a narrowband (NB) communication module.

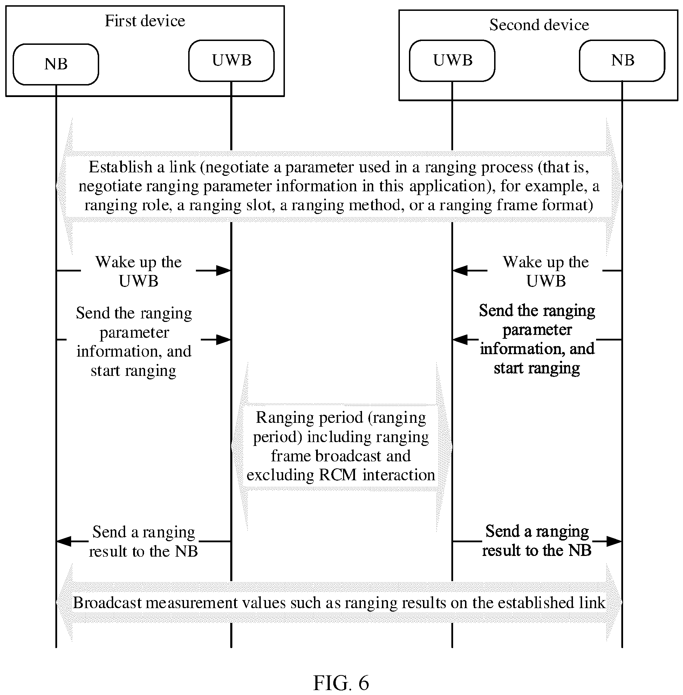

Example 1: FIG. 6 is a schematic flowchart of narrowband-assisted broadband ranging according to an embodiment of this application. As shown in FIG. 6, a narrowband-assisted broadband ranging procedure includes but is not limited to the following content: (1) Establish a link between narrowband communication modules (represented by NB in FIG. 6) in a first device and a second device, and negotiate a parameter (ranging parameter information in this application), for example, a ranging role, a ranging slot, a ranging method, or a ranging frame format, used in a ranging process on the successfully established link. For specific implementation of the ranging parameter information, refer to the foregoing description. Details are not described herein again. (2) The narrowband communication modules in the first device and the second device wake up respective UWB modules (represented by UWB in FIG. 6) to start working, and notify the respective UWB modules of the ranging parameter information determined by the narrowband communication modules through negotiation, for ranging preparation. (3) The UWB module in the first device broadcasts a ranging frame to the second device in an allocated ranging slot based on the ranging parameter information, to start ranging. It may be understood that, for a specific ranging process, refer to related descriptions in step S103 and step S104. Details are not described herein again. (4) After completing the ranging, the first device and the second device notify ranging results to respective narrowband communication modules, and the narrowband communication modules broadcast the ranging results on the previously established link to notify required devices. For a process of broadcasting the ranging results, refer to related descriptions in step S103 and step S104. Details are not described herein again.

In this embodiment of this application, the narrowband communication modules in the two devices complete construction of a personal area network, negotiation of the ranging parameter, ranging slot assignment, and the like, and the UWB modules in the two devices are responsible for performing the ranging process (the ranging process herein includes broadcast of ranging frames, but does not include exchanging of ranging control information RCM). This can reduce operating time of the UWB module, power consumption, and complexity.

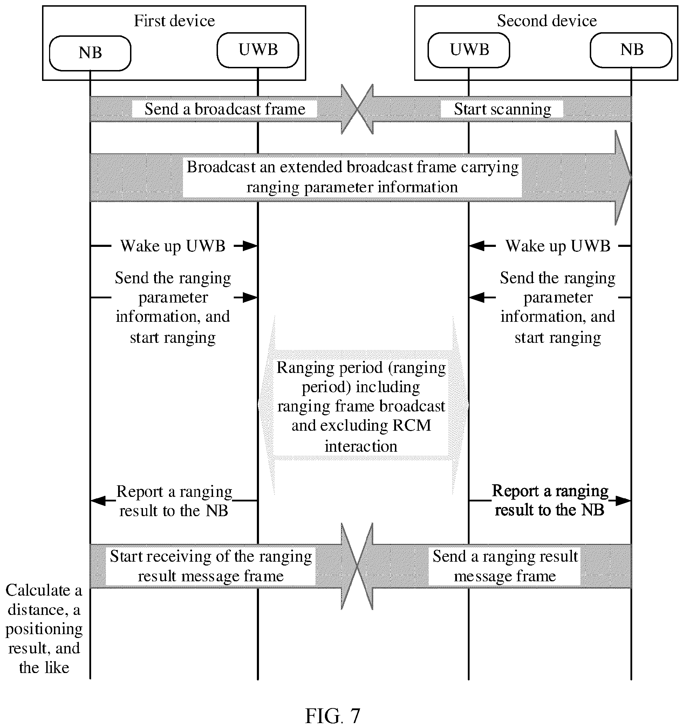

Example 2: FIG. 7 is another schematic flowchart of narrowband-assisted broadband ranging according to an embodiment of this application. In FIG. 7, an example in which narrowband communication modules (represented by NB in FIG. 7) in a first device and a second device perform communication through Bluetooth is used. As shown in FIG. 7, a narrowband-assisted broadband ranging procedure includes but is not limited to the following content: (1) The narrowband communication module in the first device sends a broadcast frame to discover a device, and the narrowband communication module in the second device initiates scanning to scan a nearby Bluetooth device. (2) The narrowband communication module in the first device packs and fills ranging parameter information into a data content field in an extended broadcast frame, and sends the extended broadcast frame in a broadcast manner. For a specific frame format of the extended broadcast frame and specific content in the ranging parameter information, refer to related descriptions in step S101 and step S102. Details are not described herein again. (3) After obtaining, through scanning, the extended broadcast frame and obtaining, through parsing, the ranging parameter information, the narrowband communication module in the second device completes creation of a ranging event based on the ranging parameter information. (4) The first device and the second device wake up respective UWB modules (represented by UWB in FIG. 7), and deliver the ranging parameter information to the respective UWB modules, to prepare for ranging. (5) The UWB modules in the first device and the second device complete the ranging based on the ranging parameter information. (6) After completing the ranging, the first device and the second device may wake up the narrowband communication modules in the first device and the second device; after the wake-up, the narrowband communication module in the second device sends a ranging result message frame (the foregoing fourth message), where the ranging result message frame includes a second ranging result; and the narrowband communication module in the first device starts to receive the ranging result message frame, and summarizes ranging results to the first device (certainly, ranging results may alternatively be summarized to the second device), to complete ranging calculation between the first device and the second device.

In this embodiment of this application, the narrowband communication module notifies, in the broadcast manner, the ranging parties of a parameter (the ranging parameter information) used by the ranging parties in a ranging process, completes construction of a personal area network, and the like. This manner can be used to reduce operating time of the UWB module and power consumption, and improve ranging efficiency; and reduce implementation complexity of the UWB module, and costs.

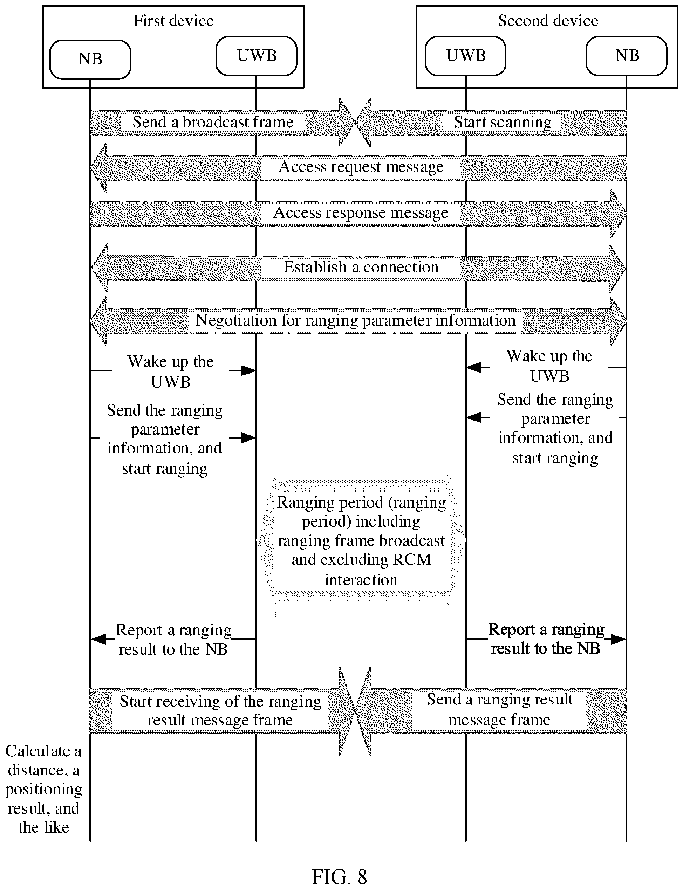

Example 3: FIG. 8 is still another schematic flowchart of narrowband-assisted broadband ranging according to an embodiment of this application. As shown in FIG. 8, a narrowband-assisted broadband ranging procedure includes but is not limited to the following content: (1) A narrowband communication module (represented by NB in FIG. 8) in a first device sends a broadcast frame to discover a device, and a narrowband communication module in a second device initiates scanning to scan a nearby device. (2) The narrowband communication module in the second device sends an access request message used to request to establish a connection to the narrowband communication module in the first device, and the narrowband communication module in the first device sends an access response message used to agree to a request of the access request message. (3) After the connection is established between the narrowband communication modules in the first device and the second device, the narrowband communication modules in the first device and the second device negotiate ranging parameter information. (4) The first device and the second device wake up respective UWB modules (represented by UWB in FIG. 8), and deliver the ranging parameter information determined through negotiation to the respective UWB modules, to prepare for ranging. (5) The UWB modules in the first device and the second device complete the ranging based on the ranging parameter information determined through negotiation. (6) After completing the ranging, the first device and the second device may wake up the narrowband communication modules in the first device and the second device; after the wake-up, the UWB modules in the first device and the second device report measurement results to the respective narrowband communication modules; the narrowband communication module in the second device sends a ranging result message frame (the foregoing fourth message), where the ranging result message frame includes a second ranging result; and the narrowband communication module in the first device starts to receive the ranging result message frame, and summarizes ranging results to the first device (certainly, ranging results may also be summarized to the second device), to complete ranging calculation between the first device and the second device.

The two devices in this embodiment of this application complete establishment of a personal area network, ranging parameter negotiation, ranging slot assignment, and the like by establishing the connection using the narrowband communication modules. This manner can be used to reduce operating time of the UWB module and power consumption, and improve ranging efficiency; and reduce implementation complexity of the UWB module, and costs.

It may be understood that the foregoing Example 1 to Example 3 are not limited to ranging between two devices, and may be extended to ranging between n (n is an integer greater than or equal to 2) devices, to meet a ranging requirement between different devices.

The foregoing content describes in detail the method provided in this application. To facilitate implementation of the foregoing solutions in embodiments of this application, embodiments of this application further provide corresponding apparatuses or devices.

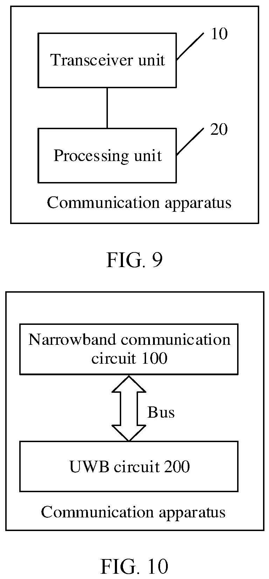

In this application, the first device and the second device are divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely a logical function division. In actual implementation, another division manner may be used. The following describes in detail the first device and the second device in embodiments of this application with reference to FIG. 9 to FIG. 12.

FIG. 9 is a diagram of a structure of a communication apparatus according to an embodiment of this application. As shown in FIG. 9, the communication apparatus includes a transceiver unit 10 and a processing unit 20.

In some embodiments of this application, the communication apparatus may be the first device shown above. To be specific, the communication apparatus shown in FIG. 9 may be configured to perform the steps, functions, or the like performed by the first device in the foregoing method embodiments.

The transceiver unit 10 is configured to send a first message, where the first message is used to discover a second device. The transceiver unit 10 is further configured to send a second message to the discovered second device.

For example, the processing unit 20 is configured to: generate the first message and the second message, and send the first message and the second message by using or by controlling the transceiver unit 10.

In a possible implementation, the transceiver unit 10 is further configured to receive an access request message and send an access response message.

For example, the processing unit 20 is further configured to: generate the access response message, and send the access response message by using or by controlling the transceiver unit 10.

In a possible implementation, the processing unit 20 is further configured to obtain ranging parameter information.

In a possible implementation, the transceiver unit 10 is further configured to: receive a first ranging frame, and send a second ranging frame based on the ranging parameter information.

For example, the processing unit 20 is further configured to: generate the second ranging frame based on the ranging parameter information, and send the second ranging frame by using or by controlling the transceiver unit 10.

In a possible implementation, the transceiver unit 10 is further configured to send a third message.

For example, the processing unit 20 is further configured to: generate the third message, and send the third message by using or by controlling the transceiver unit 10.

In a possible implementation, the transceiver unit 10 is further configured to receive a fourth message.

It may be understood that for specific descriptions of the first message, the second message, the third message, the fourth message, the ranging parameter information, the first ranging frame, the second ranging frame, the access request message, the access response message, and the like, refer to the foregoing method embodiments. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments (for example, FIG. 4). Details are not described herein.

FIG. 9 is reused. In some other embodiments of this application, the communication apparatus may be the second device shown above. To be specific, the communication apparatus shown in FIG. 9 may be configured to perform the steps, functions, or the like performed by the second device in the foregoing method embodiments.

The transceiver unit 10 is configured to receive a first message and a second message.

In a possible implementation, the transceiver unit 10 is further configured to: send an access request message and receive an access response message.

For example, the processing unit 20 is configured to: generate the access request message, and send the access request message by using or by controlling the transceiver unit 10.

In a possible implementation, the transceiver unit 10 is further configured to: send a first ranging frame based on ranging parameter information and receive a second ranging frame.

For example, the processing unit 20 is further configured to: generate the first ranging frame based on the ranging parameter information, and send the first ranging frame by using or by controlling the transceiver unit 10.

In a possible implementation, the transceiver unit 10 is further configured to receive a third message.

In a possible implementation, the transceiver unit 10 is further configured to send a fourth message.

For example, the processing unit 20 is further configured to: generate the fourth message, and send the fourth message by using or by controlling the transceiver unit 10.

It may be understood that for specific descriptions of the first message, the second message, the third message, the fourth message, the ranging parameter information, the first ranging frame, the second ranging frame, the access request message, the access response message, and the like, refer to the foregoing method embodiments. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments (for example, FIG. 4). Details are not described herein.

The foregoing describes the first device and the second device in embodiments of this application. The following describes possible product forms of the first device and the second device. It should be understood that a product in any form that has the functions of the first device in FIG. 9 or a product in any form that has the functions of the second device in FIG. 9 falls within the protection scope of embodiments of this application. It should be further understood that the following description is merely an example, and the product forms of the first device and the second device in embodiments of this application are not limited thereto.

FIG. 10 is a diagram of another structure of a communication apparatus according to an embodiment of this application. The communication apparatus may be a first device, a second device, or a chip thereof. FIG. 10 shows only main components in the communication apparatus. A narrowband communication circuit 100 and a UWB circuit 200 may be connected through a bus. The narrowband communication circuit 100 may be configured to perform the steps or functions of the narrowband communication module in the foregoing method embodiments, and the UWB circuit 200 may be configured to perform the steps or functions of the UWB module in the foregoing method embodiments.

In some embodiments of this application, the communication apparatus shown in FIG. 10 may be configured to perform the function of the first device in the foregoing method embodiment. The narrowband communication circuit 100 is configured to send a first message, where the first message is used to discover a second device. The narrowband communication circuit 100 is further configured to send a second message to the discovered second device, where the second message carries ranging parameter information, and the ranging parameter information is used by a UWB module in the second device for ranging.

In a possible implementation, the narrowband communication circuit 100 is further configured to: receive an access request message and send an access response message, where the access request message is used to request to establish a connection to a narrowband communication module in the first device, and the access response message is used to agree to a request of the access request message.

In a possible implementation, the narrowband communication circuit 100 is further configured to obtain the ranging parameter information from a UWB circuit 200.

In a possible implementation, the UWB circuit 200 is configured to: receive a first ranging frame, and send a second ranging frame based on the ranging parameter information.

In a possible implementation, the narrowband communication circuit 100 is further configured to send a third message, where the third message carries a first ranging result, and the first ranging result includes receiving time of the first ranging frame and sending time of the second ranging frame.

In a possible implementation, the UWB circuit 200 is further configured to transmit the first ranging result to the narrowband communication module in the first device.

In a possible implementation, the narrowband communication circuit 100 is further configured to receive a fourth message, where the fourth message carries a second ranging result, and the second ranging result includes receiving time of the second ranging frame and sending time of the first ranging frame.

It may be understood that for specific descriptions of the first message, the second message, the third message, the fourth message, the ranging parameter information, the first ranging frame, the second ranging frame, the access request message, the access response message, and the like, refer to the foregoing method embodiments. Details are not described herein again.

In some other embodiments of this application, the communication apparatus shown in FIG. 10 may be configured to perform the function of the second device in the foregoing method embodiment. The narrowband communication circuit 100 is configured to: receive a first message, and receive a second message, where the first message is used to discover the second device, the second message carries ranging parameter information, and the ranging parameter information is used by an ultra-wideband UWB module in the second device for ranging.

In a possible implementation, the narrowband communication circuit 100 is further configured to: send an access request message and receive an access response message, where the access request message is used to request to establish a connection to a narrowband communication module in a first device, and the access response message is used to agree to a request of the access request message.

In a possible implementation, the narrowband communication circuit 100 is further configured to transmit the ranging parameter information to the UWB circuit 200.

In a possible implementation, the UWB circuit 200 is configured to: send a first ranging frame based on the ranging parameter information, and receive a second ranging frame.

In a possible implementation, the narrowband communication circuit 100 is further configured to receive a third message, where the third message carries a first ranging result, and the first ranging result includes receiving time of the first ranging frame and sending time of the second ranging frame.

In a possible implementation, the narrowband communication circuit 100 is further configured to send a fourth message, where the fourth message carries a second ranging result, and the second ranging result includes receiving time of the second ranging frame and sending time of the first ranging frame.

In a possible implementation, the UWB circuit 200 is further configured to transmit the second ranging result to the narrowband communication circuit 100.

It may be understood that for specific descriptions of the first message, the second message, the third message, the fourth message, the ranging parameter information, the first ranging frame, the second ranging frame, the access request message, the access response message, and the like, refer to the foregoing method embodiments. Details are not described herein again.

In a possible implementation, in the communication apparatus shown in FIG. 9, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connecting the processor and the transceiver is not limited in this embodiment of this application. In a process of performing the foregoing method, a process of sending the message (for example, sending the first message, the second message, the third message, or the fourth message) in the foregoing method may be understood as a process of outputting the foregoing message by the processor. When outputting the message, the processor outputs the message to the transceiver, so that the transceiver performs transmission. After the message is output by the processor, other processing may further need to be performed on the message before the message arrives at the transceiver. Similarly, a process of receiving the message (for example, receiving the first message, the second message, the third message, or the fourth message) in the foregoing method may be understood as a process of receiving the foregoing input message by the processor. When the processor receives the input message, the transceiver receives the message, and inputs the message into the processor. Further, after the transceiver receives the foregoing message, other processing may need to be performed on the foregoing message before the message is input into the processor.

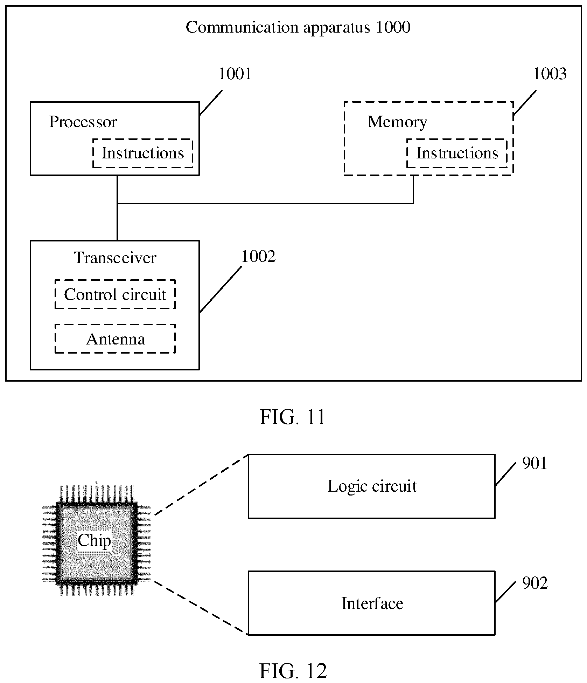

FIG. 11 is a diagram of a structure of a communication apparatus 1000 according to an embodiment of this application. The communication apparatus 1000 may be a first device, a second device, or a chip thereof. FIG. 11 shows only main components in the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to perform the function of the first device in the foregoing method embodiment. The processor 1001 may be configured to generate the first message sent in step S101, the second message sent in step S102, and the second ranging frame sent in step S104 in FIG. 4, and/or configured to perform another process of the technology described in this specification. The transceiver 1002 may be configured to perform step S101, step S102, step S104, and the like in FIG. 4, and/or another process of the technology described in this specification.

In another design, the communication apparatus 1000 may be configured to perform the function of the second device in the foregoing method embodiment. The processor 1001 may be configured to generate the first ranging frame sent in step S103 in FIG. 4, and/or configured to perform another process of the technology described in this specification. The transceiver 1002 may be configured to perform step S103 in FIG. 4, and/or another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform signal transmission or transfer.

In any one of the foregoing designs, the processor 1001 may store instructions. The instructions may be a computer program. The computer program is run on the processor 1001, so that the communication apparatus 1000 can perform the method described in the foregoing method embodiments. The computer program may be fixed in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (n-Metal oxide semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by that in FIG. 11. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC, such as a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In another possible implementation, in the communication apparatus shown in FIG. 9, the processing unit 20 in the communication apparatus shown in FIG. 9 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 12 is a diagram of another structure of a communication apparatus according to an embodiment of this application. As shown in FIG. 12, the communication apparatus shown in FIG. 12 includes a logic circuit 901 and an interface 902. That is, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 12 shows an example in which the communication apparatus is a chip. The chip includes the logic circuit 901 and the interface 902.

In this embodiment of this application, the logic circuit and the interface may be coupled to each other. A specific manner of connection between the logical circuit and the interface is not limited in this embodiment of this application.

For example, when the communication apparatus is configured to perform the method, the function, or the step performed by the first device in the foregoing method embodiment, the logic circuit 901 is configured to generate a first message and a second message; and the interface 902 is configured to output the first message and the second message.

For example, when the communication apparatus is configured to perform the method, the function, or the step performed by the second device in the foregoing method embodiment, the interface 902 is configured to input the first message and the second message; and the logic circuit 901 is configured to parse the second message to obtain ranging parameter information in the second message.

It may be understood that for specific descriptions of the first message, the second message, the ranging parameter information, and the like, refer to the foregoing method embodiments. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementation of embodiments shown in FIG. 12, refer to the foregoing embodiments. Details are not described herein again.

An embodiment of this application further provides a communication apparatus. The communication apparatus includes a system on chip (system on chip, SoC) chip. The SoC chip includes a transceiver, a processor coupled to the transceiver, and optionally further includes an internal memory and an external memory coupled to the processor. The transceiver is configured to receive and send messages, and the processor is configured to execute program instructions stored in the internal memory and the external memory, so that the communication apparatus performs the method in the foregoing method embodiment.

The SoC is a system on chip, which means that the SoC is a product, is an integrated circuit with a dedicated target, and includes a complete system and all content of embedded software. The SoC is also a technology that implements an entire process of from determining system functions, to dividing software/hardware, and then completing design.

An embodiment of this application further provides a communication system. The communication system includes a first device and a second device. The first device and the second device may be configured to perform the method in the foregoing method embodiments.

In addition, this application further provides a computer program. The computer program is used to implement the operations and/or processing performed by the first device in the method provided in this application.

This application further provides a computer program. The computer program is configured to implement the operations and/or the processing performed by the second device in the method provided in this application.

This application further provides a computer-readable storage medium. The computer-readable storage medium stores computer code. When the computer code is run on a computer, the computer is enabled to perform the operations and/or processing performed by the first device in the method provided in this application.

This application further provides a computer-readable storage medium. The computer-readable storage medium stores computer code. When the computer code is run on a computer, the computer is enabled to perform the operations and/or the processing performed by the second device in the method provided in this application.

This application further provides a computer program product. The computer program product includes computer code or a computer program. When the computer code or the computer program is run on a computer, the operations and/or processing performed by the first device in the method provided in this application is performed.

This application further provides a computer program product. The computer program product includes computer code or a computer program. When the computer code or the computer program is run on a computer, the operations and/or processing performed by the second device in the method provided in this application is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one location, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information exchanging method, comprising:

   sending, by a narrowband communication module in a first device, a first message, wherein the first message is used to discover a second device; and

   sending, by the narrowband communication module in the first device, a second message to the discovered second device, wherein the second message carries ranging parameter information, and the ranging parameter information is used by an ultra-wideband UWB module in the second device for ranging.

2. The method according to claim 1, wherein the second message is an extended broadcast frame, and the ranging parameter information is carried in a data content field in the extended broadcast frame; and

the extended broadcast frame comprises a data type field, the data type field indicates a type of broadcast data carried in the extended broadcast frame, and the data type field is set to a reserved value to indicate that the extended broadcast frame carries the ranging parameter information.

3. The method according to claim 1, wherein the ranging parameter information is carried in a payload payload of the second message; and
before the sending, by the narrowband communication module in the first device, a second message to the discovered second device, the method further comprises:

   receiving, by the narrowband communication module in the first device, an access request message sent by a narrowband communication module in the second device, wherein the access request message is used to request to establish a connection to the narrowband communication module in the first device; and
   sending, by the narrowband communication module in the first device, an access response message, wherein the access response message is used to agree to a request of the access request message.

4. The method according to any one of claims 1 to 3, before the sending, by the narrowband communication module in the first device, a second message to the discovered second device, the method further comprises:
obtaining, by the narrowband communication module in the first device, the ranging parameter information from a UWB module in the first device.

5. The method according to any one of claims 1 to 4, wherein the ranging parameter information comprises one or more of the following:

   a ranging method, an identifier of a ranging device, a ranging role of a ranging device, a ranging mode, a ranging frame format, ranging slot assignment, an angle measurement requirement, or a measurement value report manner; and
   the ranging method comprises single-sided two-way ranging and double-sided two-way ranging, the ranging device comprises the second device, and the ranging mode comprises one-to-one ranging, one-to-many ranging, or many-to-many ranging.

6. The method according to any one of claims 1 to 5, wherein after the sending, by the narrowband communication module in the first device, a second message to the discovered second device, the method further comprises:

   receiving, by the UWB module in the first device, a first ranging frame sent by the UWB module in the second device; and
   sending, by the UWB module in the first device, a second ranging frame based on the ranging parameter information.

7. The method according to claim 6, wherein after the receiving, by the UWB module in the first device, a first ranging frame sent by the UWB module in the second device, the method further comprises:
sending, by the narrowband communication module in the first device, a third message, wherein the third message carries a first ranging result, and the first ranging result comprises receiving time of the first ranging frame and sending time of the second ranging frame.

8. The method according to claim 7, wherein before the sending, by the narrowband communication module in the first device, a second message, the method further comprises:
transmitting, by the UWB module in the first device, the first ranging result to the narrowband communication module in the first device.

9. The method according to claim 7 or 8, wherein the first ranging result further comprises one or more of the following:
positioning coordinates, an angle of arrival AOA horizontal angle of the second device relative to the first device, an AOA elevation angle of the second device relative to the first device, or reliability of the receiving time of the first ranging frame.

10. The method according to claim 6, wherein after the sending, by the UWB module in the first device, a second ranging frame based on the ranging parameter information, the method further comprises:
receiving, by the narrowband communication module in the first device, a fourth message sent by the narrowband communication module in the second device, wherein the fourth message carries a second ranging result, and the second ranging result comprises receiving time of the second ranging frame and sending time of the first ranging frame.

11. The method according to claim 10, wherein the second ranging result further comprises one or more of the following:
positioning coordinates, an AOA horizontal angle of the first device relative to the second device, an AOA elevation angle of the first device relative to the second device, or reliability of the receiving time of the second ranging frame.

**12.** An information exchanging method, comprising:

receiving, by a narrowband communication module in a second device, a first message sent by a narrowband communication module in a first device, wherein the first message is used to discover the second device; and
receiving, by the narrowband communication module in the second device, a second message sent by the narrowband communication module in the first device, wherein the second message carries ranging parameter information, and the ranging parameter information is used by an ultra-wideband UWB module in the second device for ranging.

**13.** The method according to claim 12, wherein the second message is an extended broadcast frame, and the ranging parameter information is carried in a data content field in the extended broadcast frame; and
the extended broadcast frame comprises a data type field, the data type field indicates a type of broadcast data carried in the extended broadcast frame, and the data type field is set to a reserved value to indicate that the extended broadcast frame carries the ranging parameter information.

**14.** The method according to claim 12, wherein the ranging parameter information is carried in a payload payload of the first message; and
before the receiving, by the narrowband communication module in the second device, a second message sent by the narrowband communication module in the first device, the method further comprises:

sending, by the narrowband communication module in the second device, an access request message, wherein the access request message is used to request to establish a connection to the narrowband communication module in the first device; and
receiving, by the narrowband communication module in the second device, an access response message sent by the narrowband communication module in the first device, wherein the access response message is used to agree to a request of the access request message.

**15.** The method according to any one of claims 12 to 14, wherein the ranging parameter information comprises one or more of the following:

a ranging method, an identifier of a ranging device, a ranging role of a ranging device, a ranging mode, a ranging frame format, ranging slot assignment, an angle measurement requirement, or a measurement value report manner; and
the ranging method comprises single-sided two-way ranging and double-sided two-way ranging, the ranging device comprises the second device, and the ranging mode comprises one-to-one ranging, one-to-many ranging, or many-to-many ranging.

**16.** The method according to any one of claims 12 to 15, wherein after the receiving, by the narrowband communication module in the second device, a second message sent by the narrowband communication module in the first device, the method further comprises:
transmitting, by the narrowband communication module in the second device, the ranging parameter information to the UWB module in the second device.

**17.** The method according to claim 16, wherein after the transmitting, by the narrowband communication module in the second device, the ranging parameter information to the UWB module in the second device, the method further comprises:

sending, by the UWB module in the second device, a first ranging frame based on the ranging parameter information; and
receiving, by the UWB module in the second device, a second ranging frame sent by a UWB module in the first device.

**18.** The method according to claim 17, wherein after the sending, by the UWB module in the second device, a first ranging frame based on the ranging parameter information, the method further comprises:
receiving, by the narrowband communication module in the second device, a third message sent by the narrowband communication module in the first device, wherein the third message carries a first ranging result, and the first ranging result comprises receiving time of the first ranging frame and sending time of the second ranging frame.

**19.** The method according to claim 18, wherein the first ranging result further comprises one or more of the following:
positioning coordinates, an angle of arrival AOA ranging horizontal angle of the second device relative to the first device, an AOA elevation angle of the second device relative to the first device, or reliability of the receiving time of the first ranging frame.

**20.** The method according to claim 16, wherein after the receiving, by the UWB module in the second device, a second ranging frame sent by a UWB module in the first device, the method further comprises:
sending, by the narrowband communication module in the second device, a fourth message, wherein the fourth message carries a second ranging result, and the second ranging result comprises receiving time of the second ranging frame and sending time of the first ranging frame.

**21.** The method according to claim 20, wherein before the sending, by the narrowband communication module in the second device, a fourth message, the method further comprises:
transmitting, by the UWB module in the second device, the second ranging result to the narrowband communication module in the second device.

**22.** The method according to claim 20 or 21, wherein the second ranging result further comprises one or more of the following:
positioning coordinates, an AOA horizontal angle of the first device relative to the second device, an AOA elevation angle of the first device relative to the second device, or reliability of the receiving time of the second ranging frame.

**23.** A communication apparatus, comprising a narrowband communication circuit and a UWB circuit, wherein

the narrowband communication circuit is configured to perform the method according to any one of claims 1, 3, 4, 7, and 10, and the UWB circuit is configured to perform the method according to claim 6 or 8; or
the narrowband communication circuit is configured to perform the method according to any one of claims 12, 14, 16, 18, and 20, and the UWB circuit is configured to perform the method according to claim 17 or 21.

**24.** A system on chip SoC chip, wherein the SoC chip comprises a transceiver, a processor, and an internal memory and an external memory that are coupled to the processor, the transceiver is configured to receive and send messages, and the processor is configured to execute program instructions stored in the internal memory and the external memory, so that the SoC chip performs the method according to any one of claims 1 to 22.

**25.** A communication system, comprising the first device according to any one of claims 1 to 11 and the second device according to any one of claims 12 to 22.

Device 1/Device 1
UWB module
Narrowband communication module
Device 2/Device 2
Narrowband communication module
UWB module
Data transmission
Positioning and/or ranging

FIG. 1

First device
Second device
t1
Ranging frame 1
t2
t3
Ranging frame 2
t4

FIG. 2

Device 1
Device 2
BLE link (Wake up UWB)
The UWB is woken up using BLE, the woken-up UWB starts up with default parameters
UWB wake-up
UWB wake-up
UWB operating period
Ranging beacon
RCAP
RCFP
...
RCAP
RCFP
RCM
RCM
...
Ranging management period
Ranging period
Each device performs ranging based on the RCM
Beacon interval
Ranging process
Beacon time period
Contention and contention-free slots
Ranging period
Repeat a ranging round
A device in a personal area network performs time synchronization with a coordinator, and obtains a beacon network control parameter
In the contention slot, each network access device may intervene as required; and work in the contention-free period is assigned by the coordinator
Including ranging role allocation, slot allocation, ranging frame broadcast, measurement value information frame broadcast, and other interaction
Beacon: Beacon Ranging beacon: Ranging beacon
Beacon interval: Beacon interval Ranging period: Ranging period
Ranging management period: Ranging management period

FIG. 3

First device
UWB module
Narrowband communication module
Second device
UWB module
Narrowband communication module
S101: Send a first message, where the first message is used to discover the second device
S102: Send a second message to the discovered second device, where the second message carries ranging parameter information, and the ranging parameter information is used by the UWB module in the second device for ranging
S103: Send a first ranging frame based on the ranging parameter information
S104: Send a second ranging frame based on the ranging parameter information

FIG. 4

| 6 bits | 1 bit | 1 bit | 6 octects | 1 octect | 6 octects | 4 octects | 1 octect | 1 octect | Variable/ Variable |
|---|---|---|---|---|---|---|---|---|---|
| Broadcast frame structure indication | Local access stratum identifier type | Peer access stratum identifier type | Local access stratum identifier | Parsing key identifier | Peer access stratum identifier | Extended broadcast frame resource configuration information | Data type | Data length | Data content |

Bit: Bit
Octect: Octect

Ranging parameter information

FIG. 5

First device
NB
UWB
Second device
UWB
NB
Establish a link (negotiate a parameter used in a ranging process (that is, negotiate ranging parameter information in this application), for example, a ranging role, a ranging slot, a ranging method, or a ranging frame format)
Wake up the UWB
Wake up the UWB
Send the ranging parameter information, and start ranging
Send the ranging parameter information, and start ranging
Ranging period (ranging period) including ranging frame broadcast and excluding RCM interaction
Send a ranging result to the NB
Send a ranging result to the NB
Broadcast measurement values such as ranging results on the established link

FIG. 6

First device
NB
UWB
Second device
UWB
NB
Send a broadcast frame
Start scanning
Broadcast an extended broadcast frame carrying ranging parameter information
Wake up UWB
Wake up UWB
Send the ranging parameter information, and start ranging
Send the ranging parameter information, and start ranging
Ranging period (ranging period) including ranging frame broadcast and excluding RCM interaction
Report a ranging result to the NB
Report a ranging result to the NB
Start receiving of the ranging result message frame
Send a ranging result message frame
Calculate a distance, a positioning result, and the like

FIG. 7

First device
NB
UWB
Second device
UWB
NB
Send a broadcast frame
Start scanning
Access request message
Access response message
Establish a connection
Negotiation for ranging parameter information
Wake up the UWB
Send the ranging parameter information, and start ranging
Wake up the UWB
Send the ranging parameter information, and start ranging
Ranging period (ranging period) including ranging frame broadcast and excluding RCM interaction
Report a ranging result to the NB
Report a ranging result to the NB
Start receiving of the ranging result message frame
Send a ranging result message frame
Calculate a distance, a positioning result, and the like

FIG. 8

Transceiver unit
10
Processing unit
20
Communication apparatus

FIG. 9

Narrowband communication circuit 100
Bus
UWB circuit 200
Communication apparatus

FIG. 10

Communication apparatus 1000
1001
1003
Processor
Instructions
Memory
Instructions
Transceiver
1002
Control circuit
Antenna

FIG. 11

Chip
Logic circuit
901
Interface
902

FIG. 12

**INTERNATIONAL SEARCH REPORT**

International application No. **PCT/CN2023/082489**

**A. CLASSIFICATION OF SUBJECT MATTER**

H04W4/029(2018.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXT, CNKI: 测距, 超宽带, 近场通信, 协商, 参数, 帧, 消息, 发现, measure, distance, UWB, WiFi, BLE, NFC, Zigbee, negotiate, parameter, frame, discover, message

**C. DOCUMENTS CONSIDERED TO BE RELEVANT**

| Category* | Citation of document, with indication, where appropriate, of the relevant passages | Relevant to claim No. |
|---|---|---|
| X | US 2021136556 A1 (SAMSUNG ELECTRONICS CO., LTD.) 06 May 2021 (2021-05-06) description, paragraphs [0067]-[0070] | 1-25 |
| X | CN 113660604 A (GUANGDONG OPPO MOBILE COMMUNICATIONS CO., LTD.) 16 November 2021 (2021-11-16) description, paragraphs [0079]-[0080] | 1-25 |
| X | CN 114007237 A (HANGZHOU YOUZHILIAN TECHNOLOGY CO., LTD.) 01 February 2022 (2022-02-01) description, paragraph [0027] | 1-25 |
| A | US 2022066010 A1 (CISCO TECHNOLOGY, INC.) 03 March 2022 (2022-03-03) entire document | 1-25 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 April 2023** | **04 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/082489**

| Patent document cited in search report | Publication date (day/month/year) | Patent family member(s) | Publication date (day/month/year) |
|---|---|---|---|
| US 2021136556 A1 | 06 May 2021 | WO 2021085825 A1 | 06 May 2021 |
| | | EP 4005251 A1 | 01 June 2022 |
| | | US 11576028 B2 | 07 February 2023 |
| | | KR 20210053018 A | 11 May 2021 |
| | | CN 114599987 A | 07 June 2022 |
| CN 113660604 A | 16 November 2021 | None | |
| CN 114007237 A | 01 February 2022 | None | |
| US 2022066010 A1 | 03 March 2022 | WO 2022046479 A1 | 03 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210300592
- CN 202210728173X